(19) Europäisches Patentamt
European Patent Office
Office européen des brevets

(11) **EP 3 555 856 B1**

(12) **EUROPEAN PATENT SPECIFICATION**

(45) Date of publication and mention
of the grant of the patent:
**29.04.2020  Bulletin 2020/18**

(51) Int Cl.:
**G06T 7/586** (2017.01)    **G06T 7/521** (2017.01)

(21) Application number: **17817064.3**

(86) International application number:
**PCT/GB2017/053714**

(22) Date of filing: **12.12.2017**

(87) International publication number:
**WO 2018/109453 (21.06.2018 Gazette 2018/25)**

(54) **SYSTEMS AND METHODS FOR OBTAINING DATA CHARACTERIZING A THREE-DIMENSIONAL OBJECT**

SYSTEME UND VERFAHREN ZUR GEWINNUNG VON DATEN, DIE EIN DREIDIMENSIONALES OBJEKT CHARAKTERISIEREN

SYSTÈMES ET PROCÉDÉS D'OBTENTION DE DONNÉES CARACTÉRISANT UN OBJET TRIDIMENSIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2016  GB 201621501**

(43) Date of publication of application:
**23.10.2019  Bulletin 2019/43**

(73) Proprietor: **Fuel 3D Technologies Limited**
**Oxford 0X4 4GE (GB)**

(72) Inventor: **LARKINS, Andrew Henry John**
**Newbury**
**Berkshire RG14 1RU (GB)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(56) References cited:
**WO-A1-2012/146720    WO-A2-2008/039539**

**CN-U- 202 477 695     US-A1- 2009 116 712**
**US-B2- 7 450 783**

- Ibrahim Cem Girit ET AL: "Assessment and Measurement of Subcutaneous Tumors in Rodents", Comparative Medicine, 1 June 2008 (2008-06-01), pages 264-270, XP055314410, Retrieved from the Internet: URL:http://docserver.ingentaconnect.com/de liver/connect/aalas/15320820/v58n3/s5.pdf? expires=1477557604&id=89008626&titleid=720 10023&accname=European+Patent+Office&che ck sum=9DA9B814138CCD7AA761C66D8F7F5389 [retrieved on 2016-10-27]
- PLASSMANN P: "Measuring wounds a guide to the use of wound measurement techniques", JOURNAL OF WOUND CARE, MACMILLAN, LONDON, GB, vol. 4, no. 6, 1 June 1995 (1995-06-01), pages 269-272, XP003009321, ISSN: 0969-0700
- BOCCI G ET AL: "A new biometric tool for three-dimensional subcutaneous tumor scanning in mice", IN VIVO: INTERNATIONAL JOURNAL OF EXPERIMENTAL AND CLINICAL PATHOPHYSIOLOGY AND DRUG RESEARCH, INTERNATIONAL INSTITUTE OF ANTICANCER RESEARCH, GR, vol. 28, no. 1, 16 January 2014 (2014-01-16), pages 75-80, XP009503104, ISSN: 0258-851X

## Description

Summary of the invention

The present invention relates to an imaging method and an imaging system for generating three-dimensional (3D) images of a three-dimensional object such as a tumor on the body of an animal, especially a mammal, such as a rat or other rodent. It further relates to a method performed by, or using, the imaging system.

Background of the invention

Much laboratory research involves studying growths and/or wounds on the skin of a laboratory animal such as a rat or other mammal. In particular, subcutaneous growths such as tumors are often studied. For example, in the case of a laboratory animal which is subject to a treatment regime, measurements of the extent and/or the growth speed of tumors give useful information about the treatment regime. The tumors may be measured laterally (that is, their extent parallel to the skin surface) or by their protrusion (that is, their extent perpendicular to the skin surface). Other research involves measurement at intervals of wounds on the skin of a laboratory animal, i.e. cavities in the skin, e.g. to measure how quickly wounds heal (or expand).

Conventionally, measurements of growths/cavities are obtained manually using calipers, often after the animal has been shaved. This has several disadvantages: it is subject to human error; and it is somewhat subjective since different laboratory workers may measure tumors in slightly different ways (e.g. measuring different positions on the tumor), and may apply different levels of compression to the tumor using the calipers. A particular problem is that it is hard to measure subcutaneous tumors which do not protrude far transverse to the skin surface. To see these clearly, the laboratory worker has to stretch the animal's skin over the tumor, so that the profile of the tumor is clearly visible beneath it, a process called "scruffing", and then measure the tumor with calipers held in the worker's other hand. Scruffing is typically also needed when a cavity in the animal's skin is measured. The laboratory worker needs some skill to do this properly, especially if the animal is squirming. The measurement process may therefore be time-consuming and have insufficient repeatability.

Biopticon Corporation, of Princeton, New Jersey, United States, offers an apparatus (TurboImager™) for assisting in this process. The animal is pressed against a black plate defining an aperture, with the tumor in register with the aperture. A 3-D surface profile of the tumor is obtained by scanning a laser at the tumor transverse to the plate in a raster fashion, while a camera collects light reflected by the skin of the animal. This process is described in "A Structured Light-based System for Scanning Subcutaneous Tumors in Laboratory Animals" by I. C. Girit et al, Comparative Medicine, Vol 58, p264-270 (2008). WO2012/146720A discloses a hand-held device for 3D measurements of subcutaneous tumours in mice. US7450783 discloses a method for measuring size and volume of tumors in animals using 3D image construction from 2D images of the object and superimposed patterned light.

Summary of the invention

The present inventors have noticed that if the animal is not sufficiently scruffed, then the accuracy of the measurement carried out by the TurboImager™ device is reduced, because although the configuration of the skin surface is correctly captured, that surface does not accurately reflect the profile of the underlying tumor. This problem is most acute in the case of tumors with a low protrusion transverse to the skin surface. In this case, the system may reach an incorrect conclusion about the positions of the edge of the tumor, so measurements of the extent of the tumor in the lateral direction are subject to significant errors.

In general terms, the present invention proposes forming a three-dimensional model of a portion of the skin of an animal, such as a portion exhibiting a protrusion (e.g. due to a tumor) or cavity (due to a wound), by:

(i) capturing using an energy sensor at least one first two-dimensional (2-D) image of a portion of the skin of the animal when the animal is located in an imaging region of an imaging assembly;

(ii) a confirmation step of using the two-dimensional image to determine whether the skin of the animal has been correctly presented (that is, correctly scruffed); and

(iii) following the confirmation step, a 3-D imaging step of forming a 3-D image of the skin of the animal using at least one second 2-D image of the skin of the animal. One or more parameters describing the tumor may then be extracted (e.g. automatically) from the 3-D image. Specific expressions of the invention are provided by claims 1 and 15.

The lighting used to capture the first 2-D image(s) may be selected to optimize reflections from skin at the side of the tumor/wound, while the lighting used to capture the second 2-D images may be selected to optimize the 3-D imaging process.

For example, to accentuate the shape of the sides of the tumor/wound, the first 2-D images may be captured with the skin of the animal illuminated principally from the side of the tumor/wound, while the second images may be captured with the skin of the animal is illuminated to a greater extent transverse to the skin surface at the top of the tumor. This means that in the first 2-D images the sides of the tumor/wound should appear more distinct, so that the first 2-D images are suitable for determining if the animal is correctly scruffed. This idea is inspired by a technique used in the separate field of microscopy, where it is known to illuminate a subject obliquely to enhance contrast in specimens which are not imaged well under normal brightness conditions. This microscopy technique is referred to as "darkfield illumination" (DFI). The second 2-D images are less suitable for determining correct scruffing, but may be more suitable than the first 2-D images for forming an accurate 3-D model of skin around the tumor/wound.

To put this more precisely, the imaging region is illuminated by an illumination system which comprises: one or more energy sources (that is, light sources, but not limited to light which is in the visible spectrum) for (a) illuminating the imaging region in at least one first direction having a first angle to a viewing direction of the energy sensor at least while the first 2-D image(s) are captured, and (b) illuminating the viewing region in at least one second direction which is at a second angle to the viewing direction of the energy sensor at least while the second 2-D image(s) are captured. The first angle is greater than the second angle. The first image(s) would be captured using a higher ratio than the second image(s) of (a) light transmitted in the at least one first direction, to (b) light transmitted in the at least one second direction.

In principle, the first 2-D images could be captured using light of a different frequency range from that of the second 2-D images. For example, the energy sensor could be operative to generate respective images using light in a first frequency range, and light in a second frequency range, where the first and second frequency ranges preferably do not overlap. The intensity of the light transmitted to the imaging region in the first direction to the light transmitted to the imaging region in the second direction, would be higher for the first frequency range than for the second frequency range. In this case, the images generated by the energy sensor using the light in the first frequency range could be used as the first 2-D images. Similarly, the images generated by the energy sensor using light in the second frequency range could be used as the second 2-D images.

Alternatively, the illumination system could be arranged to illuminate the imaging region differently at a time when the first image(s) are captured than at a time when the second 2-D images are captured. In this case, the ratio of (a) the illumination power transmitted to by the illumination system to the imaging region in the first direction, to (b) the illumination power transmitted by the illumination system to the imaging region in the second direction, may be higher when the first images are captured than when the second images are captured. Indeed, the illumination in the second direction may be turned off when the first images are captured, and/or the illumination in the first direction may be turned off when the second images are captured.

The second angle may be in the range 0°-30°, and the first angle may be more than 30°, more than 40°, more than 50°, more than 60° or even more than 70°, more than 80°, or even more than 90°. A first angle of more than 90° is possible because the body of the animal is curved, and so may not occlude the sides of the tumor/wound. Experimentally it has been found that a first angle of over 60° is preferable.

The illumination system may comprise one or more first energy sources for illuminating the imaging region in the first direction, and one or more second energy sources for illuminating the imaging region in the second direction. Alternatively, the illumination system may contain energy source(s) which are operative to generate electromagnetic energy which is transmitted to an optical transmission system of the imaging system. The optical transmission system may be operative to illuminate the imaging region in the first and second directions selectively, and the imaging system may be able to control the optical transmission system to vary the respective proportions of the energy generated by the energy source(s) which is transmitted to the imaging region in the first and second directions.

The confirmation step may be automated, or may be partially or completely manual (that is, performed by a human user who views the first image(s), makes a mental determination, and then triggers the formation of the 3-D image).

Preferably, the same energy sensor which was used to capture the first 2-D image(s) is used to capture at least one of the second 2-D image(s). In this case, the confirmation step makes it more likely that the second 2-D image(s) will permit the 3-D imaging step to give a 3-D image which accurately reflects the profile of a skin wound/subcutaneous tumor.

The term "energy sensor" is used here to mean an image capture device (e.g. a camera) for capturing at a given time a (single) 2-D image of at least part of the imaging region in a single viewing direction from a single viewpoint. The energy sensor is preferably connected to a data processing system for storing and analysing the 2-D image.

In principle, the 3-D imaging step may use at least one 2-D image which is captured using the energy sensor before the determination being made in the confirmation step. Indeed, in principle, at least one first 2-D image may also be used as a second 2-D image in the 3-D imaging step. However, more preferably, the 3-D imaging step uses 2-D image(s) which are captured using the energy sensor after a positive determination is made in the confirmation step.

For example, in some embodiments, at least one first 2-D image is captured using the energy sensor and used to perform the confirmation step, and once the confirmation step has been successfully completed, the at least one second 2-D image is captured (e.g. using the energy sensor), and used in the 3-D imaging step. In this case, no 2-D image captured prior to the determination in the confirmation step may be used in the 3-D imaging step.

The second 2-D image(s) used in the 3-D imaging step may include at least one further second 2-D image captured using an additional energy sensor, preferably after a positive determination is made in the confirmation step.

Preferably the energy sources comprise one or more first energy source(s) which are used to capture the first 2-D image(s), and one or more second energy source(s) which used to capture the second 2-D image(s). The first energy source(s) may be powered less (or not at all) when the second 2-D images are captured; and conversely the second energy source(s) may be powered less (or not at all) when the first 2-D images are captured Alternatively, in principle, the energy to illuminate the object could be provided by one or more energy source(s) which move between successive positions in which they illuminate the object in corresponding ones of the directions; or there may be an optical transmission mechanism which directs light generated by one or more energy sources to illuminate the imaging region in the first direction(s) at a first time when the first 2-D images are captured, and in the second direction(s) at a second time when the second 2-D images are captured.

The concept of providing two lighting options, one which is used for the first images and one which is used for the second images, may be considered an independent aspect of the invention, which may be useful even if the same energy sensor is not used to capture both first and second 2-D images.

The illumination directions and viewpoints preferably have a known positional relationship, which is typically fixed.

The animal may be imaged while at least the part of it containing the wound/tumor (and preferably all of the animal) is in an enclosure which obstructs ambient light from falling into the imaging region. Note that this is particularly valuable for photometric imaging (unlike a laser imaging technique) because it is necessary to know which direction the skin is being illuminated from when each corresponding image is captured. The enclosure preferably includes a guide against which the animal is positioned, to ensure the wound/tumor is well-positioned for imaging.

As noted above, the confirmation step may be automated. In this case, a computer processor may be arranged to extract from the first 2-D image(s) an elongate area corresponding to an edge of a protrusion/cavity in the animal's skin (e.g. the tumor/wound edge), and determine whether the elongate area meets a continuity criterion. For example, the continuity criterion may be that the elongate area is a loop without breaks. In other example, the continuity criterion may be that the elongate area is at least a certain number of pixels wide around its entire circumference.

Once the automatic confirmation step is successfully completed, an indication (e.g. a visual indication) may be provided to the user of the apparatus that the animal is adequately scruffed, so that in response to the indication the user may initiate the formation of the 3-D image (e.g. the capture of the second 2-D image(s)). Alternatively, the formation of the 3-D image (e.g. the capture of the second 2-D image(s)) may be initiated automatically upon completion of the automatic confirmation step.

Alternatively, the confirmation step may be performed manually, by the user viewing the first image, and initiating the formation of the 3-D image (e.g. the capture of the second 2-D image(s)) upon forming a mental conclusion based on the first 2-D image(s) that the scruffing has been successfully performed.

The step of forming the 3-D image may be performed in several ways. One option is to perform it using stereoscopy and/or photometry.

In the case of stereoscopy, the second 2-D image(s) captured by the energy sensor are used in combination with at least one 2-D image captured by at least one further energy sensor spaced from the first energy sensor and operative to capture at least one further 2-D image of at least part of the imaging region in a further viewing direction. This creates a "stereo pair" of images. Note that the term "stereo pair" is not limited to two images, but may include more than two. The "stereo pair" of image may be used to stereoscopically to create the 3-D image by a process of matching "features" in the 2-D images. The images used in the feature matching process and captured by respective ones of the energy sensors may be captured substantially simultaneously.

In the case of photometry, one or more images are captured by the imaging apparatus and/or further imaging apparatus, when the skin of the animal in the imaging region is successively illuminated from at least three respective known illumination directions. Preferably, the imaging assembly includes at least three directional energy sources which are arranged to generate energy in the respective illumination directions. Alternatively, it would be possible for these directional energy sources to be provided as at least three energy outlets from an illumination system in which there are fewer than three elements which generate the energy. For example, there could be a single energy generation unit (light generating unit) and a switching unit which successively transmits energy generated by the single energy generation unit to respective input ends of at least three energy transmission channels (e.g. optical fibers). The energy would be output at the other ends of the energy transmission channels, which would be at three respective spatially separately locations. Thus the output ends of the energy transmission channels would constitute respective energy sources. The light would propagate from the energy sources in different respective directions.

Although at least three illumination directions are required for photometric imaging, the number of illumination directions may be higher than this. The timing of the activation of the energy sources and energy sensor(s) may be controlled by a processor, such as the one which performs the confirmation step and the 3-D imaging step.

Preferably, a directional energy source is provided close to at least one of the energy sensor(s). This provides "bright field" lighting, i.e. ensuring that the whole of the object which is visible to the at least one energy sensor is lit to some extent, so that there are no completely dark regions in the stereo pair of images.

Various forms of directional energy source may be used in embodiments of the invention. For example, a standard photographic flash, a high brightness LED cluster, or Xenon flash bulb or a 'ring flash'. It will be appreciated that the energy need not be in the visible light spectrum. One or more of the energy sources may be configured to generate light in the infrared (IR) spectrum (wavelengths from 900nm to 1mm) or part of the near infrared spectrum (wavelengths from 900nm to 1100nm). Optionally, the energy may be polarized.

Where visible-light directional energy is applied, then the energy sensors may be two or more standard digital cameras, or video cameras, or CMOS sensors and lenses appropriately mounted. In the case of other types of directional energy, sensors appropriate for the directional energy used are adopted. A discrete energy sensor may be placed at each viewpoint, or in another alternative a single sensor may be located behind a split lens or in combination with a mirror arrangement.

The invention may be expressed in terms of the imaging system, or as a method carried out by a user using the imaging system, or as a method performed by the imaging system itself. The imaging system may be controlled by a processor according to program instructions, which may be stored in non-transitory form on a tangible data storage device.

Brief description of the drawings

An embodiment of the invention will now be described for the sake of example only with reference to the following figures in which:

Fig. 1 shows a first schematic view of an imaging assembly which is part of an imaging system which is an embodiment of the present invention;

Fig. 2 is a second schematic view of the imaging assembly of Fig. 1;

Fig. 3 is a flow diagram of a method which is an embodiment of the invention;

Fig. 4 is a schematic view of the imaging system of Fig. 1; and

Fig. 5, which is composed of Figs. 5(a) to 5(c), illustrates three first 2-D images captured by the imaging system of Fig. 1.

Detailed description of the embodiments

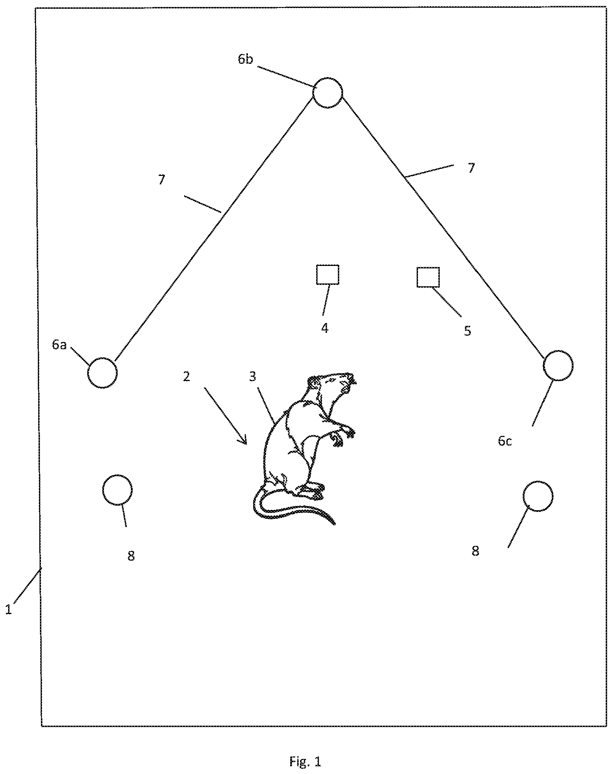

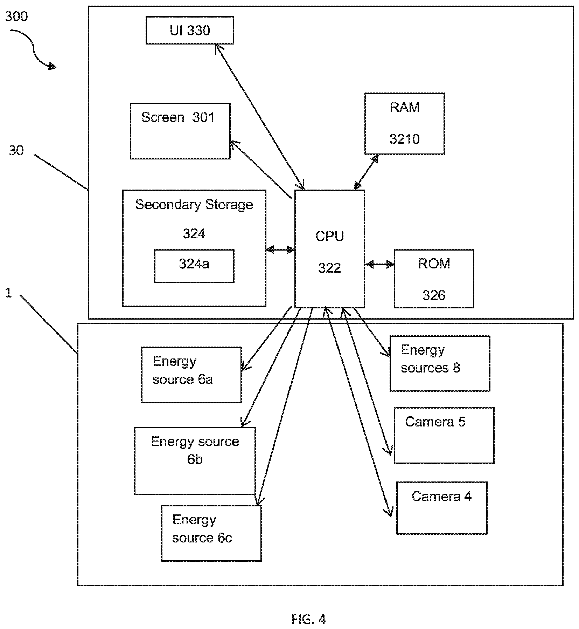

Fig. 1 shows schematically a portion is shown of an imaging assembly which is a portion of an imaging system 300 which is an embodiment of the invention, and which is depicted in Fig. 4. The imaging assembly includes a housing 1 which prevents ambient light from outside the housing entering a volume enclosed by the housing 1. That volume includes an imaging region 2 where an animal 3 may be placed. All other components of the imaging assembly are within the housing 1.

The imaging region 2 is in the field of view of an image capture system comprising two energy sensors 4, 5. The energy sensors 4, 5 are each 2-D image capture devices for capturing at any one time a single 2-D image from respective known viewpoints, and in respective known viewing directions. The energy sensors 4, 5 are referred to below as image capture devices.

Fig. 1 views the imaging assembly in a direction which is approximately opposite to the viewing directions of the image capture devices 4, 5, with the imaging region 2 in the foreground, and the image capture devices 4, 5 in the background.

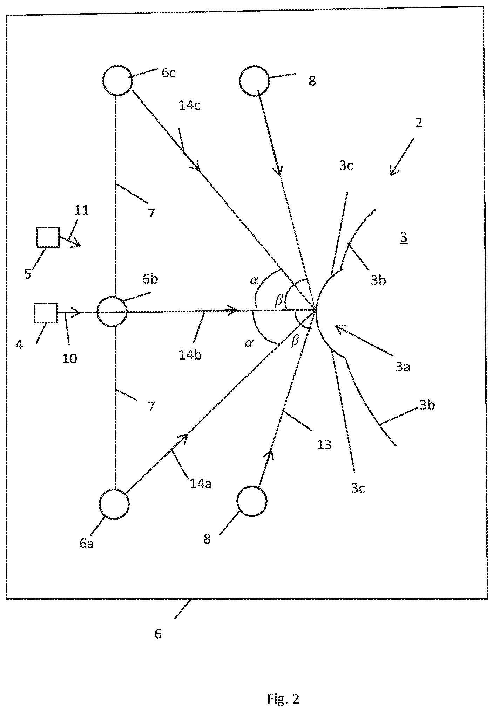

Fig. 2 shows the imaging assembly of Fig. 1, but looking transverse to the viewing directions of the image capture devices 4, 5. These viewing directions are marked as 10 and 11 respectively.

The imaging assembly further includes an illumination system. The illumination system comprises three directional light sources 6a, 6b, 6c for illuminating the imaging region 2 from respective known directions. The light sources 6a, 6b, 6c are connected by struts 7. The light sources 6a, 6b, 6c lie substantially in a plane which is transverse to the viewing direction 10 of the image capture device 4, and are arranged around the viewing direction 10 of the image capture device 4 with a 120° rotational symmetry. The directional energy sources 6a, 6b, 6c emit light towards the imaging region 2 in respective propagation directions 14a, 14b, 14c. Each of these intercepts the viewing direction 10 of the imaging device 4 at an equal angle $\alpha$, but the angle between the propagation direction 14b and the viewing direction 10 of the imaging device 4 is not visible in Fig. 2 since Fig. 2 is looking in a direction in which the propagation direction 14b appears the same as the viewing direction 10 (that is, Fig. 2 is a view in a direction which is co-planar with the viewing direction 10 and the propagation direction 14b).

The illumination system of the imaging assembly further includes energy sources 8 which are further in the direction 10 than the plane containing the light sources 6a, 6b, 6c. Although only two energy sources 8 are shown, there may be any number of energy sources, such as a single circular energy source encircling the animal 3.

The exact form of the mechanical connection between the energy sources 6a, 6b, 6c, 8 and the image capture devices 4, 5 is different in other forms of the invention, but it is preferable if it maintains the energy sources 6a, 6b, 6c, 8 and the image capture devices 4, 5 at fixed distances from each other and at fixed relative orientations. The relative positions of the energy sources 6a, 6b, 6c, 8 and image capture devices 4, 5 are pre-known.

In addition the imaging assembly shown in Figs. 1 and 2 includes a data processing system 30 (see Fig. 4) which is in electronic communication with the energy sources 6a, 6b, 6c, 8 and image capture devices 4, 5.

The energy sources 6a, 6b, 6c, 8 are each adapted to generate electromagnetic radiation, such as visible light or infra-red radiation. The energy sources 6a, 6b, 6c, 6d and image capture devices 4, 5, are all controlled by the processor 322. The output of the image capture devices 4, 5 is transmitted to the processor 322.

Note that the 2-D images captured by the image capture devices 4, 5 are typically color images, having a separate intensity for each pixel for each of three color channels. In this case, the three channels may be treated separately in the process described below. Alternatively, in variations of the embodiment, the three color channels could be combined together into a single channel (i.e. by at each pixel summing the intensities of the channels), or two of the channels could be discarded.

The image capture devices 4, 5 are spatially separated transverse to the viewing direction 10, and preferably also arranged with converging fields of view, so the image capture devices 4, 5 provide two separated respective viewpoints of a portion of the skin of the animal 3, so that stereoscopic imaging of that portion of the skin of the animal 3 is possible.

A pair of images captured from two respective viewpoints is often referred to as a "stereo pair" of images, although it will be appreciated that in variations of the embodiment more than two spatially-separated image capture devices 4, 5 may be provided, so that the animal 3 is imaged from more than two respective viewpoints. This may increase the precision and/or visible range of the apparatus. The words "stereo" and "stereoscopic" as used herein are intend to encompass, in addition to the possibility of the subject being imaged from two viewpoints, the possibility of the subject being imaged from more than two viewpoints. Suitable image capture devices for use in the invention include the 1/3-Inch CMOS Digital Image Sensor (AR0330) provided by ON Semiconductor of Arizona, US.

Each energy source 8 emits energy towards the viewing region in a respective direction which is at an angle $\beta$ with the viewing direction 10 of the image capture device 4. The angle $\beta$ is greater than the angle $\alpha$. The angle $\alpha$ may be in the range 0°-30°, and the angle $\beta$ may be more than 30°, more than 40°, more than 50°, more than 60° or even more than 70°. It is not necessary that the angle $\beta$ is the same for each of the energy sources 8.

As shown in Fig. 2, the body of the animal 3 includes a subcutaneous tumor 3a. The skin laterally to the side of the tumor 3a is labelled 3b, and the skin which covers the sides of the tumor 3a is labelled 3c. The animal is arranged such that the tumor 3a is in the imaging region 2 of the imaging assembly, and the direction in which the tumor 3a extends from the surrounding portion 3b of the skin of the animal 3 is approximately directed towards the image capture device 4.

The animal 3 may be held by a human operator (who may for example place his or her hand into the housing 1). Alternatively or additionally, the animal 3 may be held by a mechanical device. In either case, the animal is substantially prevented from moving. Nevertheless, optionally a localization template (that is, an object provided with a known surface pattern) may be provided in a fixed positional relationship with the animal 3. The localization template is useful, though not essential, for registering the images in relation to each other. Since it is in the visual field of both the image capture devices 4, 5, it appears in all the images captured by those devices, so that the processor is able to identify it from the image, and from its position, size and orientation in any given one of the images, reference that image to a coordinate system defined in relation to the localization template. In this way, all images captured by the image capture devices 4, 5 can be referenced to that coordinate system. If the animal 3 moves slightly between the respective times at which any two successive images are captured, the localization template will move correspondingly, so the animal 3 will not have moved in the coordinate system. In variations of the embodiment, the images captured by image capture devices 4, 5 may be mutually registered in other ways, such as identifying in each image landmarks of the animal 3, and using these landmarks to register the images with each other.

Because the energy sources 8 face towards the sides 3c of the tumor 3a, they brightly illuminate the skin 3c at the sides of the tumor 3a. However, the angle $\beta$ may be too high for the illumination to enable high-quality photometry, or even for stereoscopy due to shadows, which is why the energy sources 6a, 6b, 6c are provided.

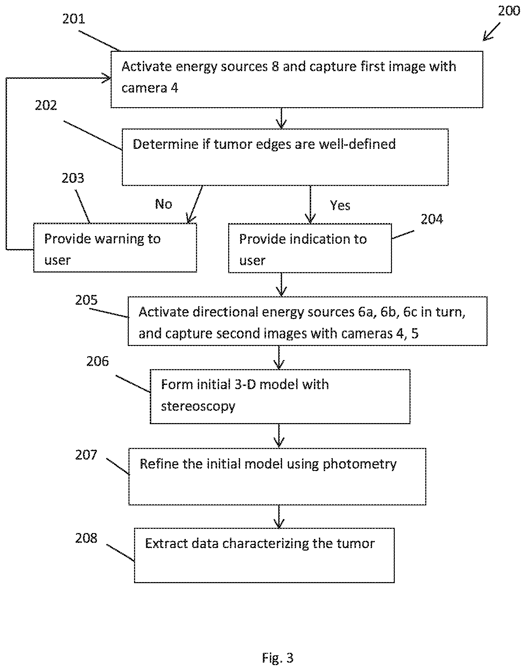

Turning to Fig. 3, a method 200 is shown which is performed by, or using, the imaging system 300.

In step 201 of method 200 the processor controls the energy sources 8 to illuminate the animal 3, and the image capture device 4 to capture at least one first 2-D image. Note that this image may be thresholded (e.g. each pixel may be set to a high or low intensity value according to whether the pixel intensity is respectively below or above a predefined threshold).

In step 202, the first 2-D image captured by the image capture device 4 is examined to determine whether the tumor edges 3c are well-defined according to a continuity criterion. This confirmation step may be done by a human operator who is able to view a screen showing the image. However, the confirmation step may be also be at least partly automated.

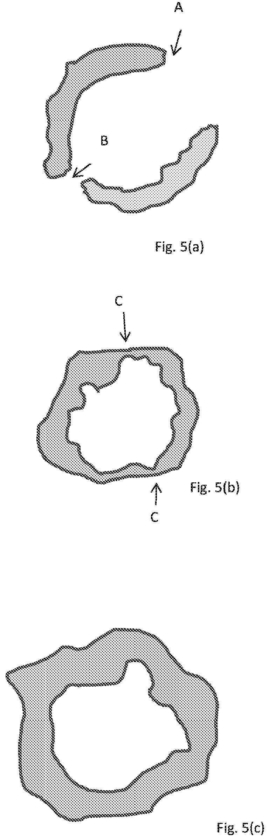

A possible first 2-D image captured in step 201 is shown in Fig. 5(a). This image shows the illuminated edges of the tumor as the darker portions of Fig. 5(a) (i.e.

high brightness areas of the skin of the animal 3 correspond to dark areas of Fig. 5(a), and vice versa). The image of Fig. 5(a) is approximately a loop, but includes two gaps marked by arrows A and B. The gap marked by arrow A is wide, indicating that a large part of one side of the tumor is not correctly scruffed. The continuity criterion may be that the image includes a continuous loop. Thus, in step 202, it may be determined (by a human operator or automatically), that the animal was not correctly scruffed.

A second possible image captured in step 201 is shown in Fig. 5(b). Again, this image shows the illuminated edges of the tumor as the darker portions of Fig. 5(b). The image of Fig. 5(b) is a loop, but the loop is thin in the two locations marked by arrows C. If the continuity criterion is that the image contains a continuous loop, then in step 202 it will be determined (by the human operator or automatically) that the animal was correctly scruffed. Alternatively, if the continuity criterion is that at all points around its circumference the loop is thicker than it is in the parts of Fig. 5(b) marked by arrows, then in step 202, it will determined (by a human operator or automatically), that the animal was not correctly scruffed.

Fig. 5(c) shows a third possible image captured in step 201 in which the loop is thick (that is, has a thickness greater than a certain number of pixels) around the whole of its circumference. In the case of Fig. 5(c) it will be determined that the animal is sufficiently scruffed irrespective of which of these continuity criteria is used.

Note that for a tumor which protrudes to a high degree from the body of the animal 3, it is easier to scruff the animal 3 to an extent which meets the continuity criterion.

If the result of the determination in step 202 was "no", a warning is provided to the user in step 203. The user will attempt to scruff the animal more completely, and then the process returns to step 201.

Alternatively, if the result of the determination in step 202 was "yes", then optionally in step 204 an indication (e.g. a visual or aural indication) may be provided to the user that the animal is correctly scruffed, and that a 3-D imaging process can now be carried out. The human user may then initiate the 3-D imaging process.

Alternatively, the step 204 can be omitted, such that if the result of the determination in step 202 was "yes", 3-D imaging process may be carried out without human triggering.

The 3-D imaging process may optionally be carried out using the process described in WO 2009/122200, "3D Imaging System", as summarized below in steps 205-208. Note however that other 3-D imaging processes may be used within the scope of the invention.

In 205, the data processing system 30 activates the directional energy sources 6a, 6b, 6c in turn, thereby successively illuminating the tumor 3a from the three respective directions. It also controls the image capture device 4 to capture a respective second image while each of the directional energy sources 6a, 6b, 6c is activated.

It also controls the image capture device 5 to capture at least one second image while at least one of the respective energy sources 6a, 6b, 6c is activated.

In step 206, the data processing system 30 uses a stereo pair of images captured by the respective image capture devices 4, 5 geometrically, e.g. by the same stereoscopic algorithm employed in WO 2009/122200, to produce an initial 3D model of the surface of the skin above the tumor 3a. This is based around known principles of optical parallax. This technique generally provides good unbiased low-frequency information (the coarse underlying shape of the surface of the tumor 3a), but is noisy or lacks high frequency detail. The stereoscopic reconstruction uses optical triangulation, by geometrically correlating pairs of features in the respective stereo pair of images captured by the image capture devices 4, 5 and corresponding to landmarks on the skin surface, to give the positions of each of the corresponding landmarks in a three-dimensional space.

In step 207, the data processing system 30 refines the initial 3-D model using the second images captured by the image capture device 4 when the respective ones of the directional light sources 6a, 6b, 6c were activated, and the photometric technique employed in WO 2009/122200. The photometric reconstruction requires an approximating model of the surface material reflectivity properties. In the general case this may be modelled (at a single point on the surface) by the Bidirectional Reflectance Distribution Function (BRDF). A simplified model is typically used in order to render the problem tractable. One example is the Lambertian Cosine Law model. In this simple model the intensity of the surface as observed by the camera depends only on the quantity of incoming irradiant energy from the energy source and foreshortening effects due to surface geometry on the object. This may be expressed as:

$$I = P\rho \boldsymbol{L} \cdot \boldsymbol{N} \qquad \text{(Eqn 1)}$$

where $I$ represents the intensity observed by the image capture device 4 at a single point on the object, $P$ the incoming irradiant light energy at that point, $\boldsymbol{N}$ the object-relative surface normal vector, $\boldsymbol{L}$ the normalized object-relative direction of the incoming lighting and $\rho$ the Lambertian reflectivity of the object at that point. Typically, variation in $P$ and $\boldsymbol{L}$ is pre-known from a prior calibration step, or from knowledge of the position of the energy sources 6a, 6b, 6b and this (plus the knowledge that $\boldsymbol{N}$ is normalized) makes it possible to recover both $\boldsymbol{N}$ and $\rho$ at each pixel. Since there are three degrees of freedom (two for $\boldsymbol{N}$ and one for $\rho$), intensity values $I$ are needed for at least three directions $L$ in order to uniquely determine both $\boldsymbol{N}$ and $\rho$. This is why three energy sources 6a, 6b, 6c are provided. On the assumption that the object exhibits Lambertian reflection, the photometry obtains an estimate of the normal direction to the surface of the object with a resolution comparable to individual pixels of the image. The normal directions are then used to refine the initial model of the 3D object obtained in step 206.

The second images are captured in step 205 within a very short time (e.g. under 1s, and more preferably under 0.1s) of them time when the first image(s) are captured in step 201, so the positive result of the confirmation step 202 gives a good indication that the animal was correctly scruffed when the second images were captured and the animal 3 has not moved in the meantime. This is particularly true since the image capture device 4 was used in collecting the first image and one or more of the second images.

In one possibility the image capture device 4 may be a video camera, and the first and second images captured by the image capture device 4 are part of a common section of video footage. In this case, the image capture device 4 may operate at a constant image capture rate throughout the imaging procedure of Fig. 3 . One or more 2-D images it generates at certain times constitute the first images, and one or more of the 2-D images it generates at later times (i.e. in step 205) constitute one or more of the second image(s). Optionally, the image capture device 5 may also be a video camera.

Fig. 4 is a block diagram showing a technical architecture of the overall imaging system 300 for performing the method. The imaging system 300 includes the imaging assembly as described above within the housing 1. It further includes a data processing system 30 which includes a processor 322 (which may be referred to as a central processor unit or CPU) that is in communication with the image capture devices 4, 5, for controlling when they capture images and for receiving the images. The processor 322 is further in communication with, and able to control the energy sources 6a, 6b, 6c, 8.

The processor 322 is also in communication with memory devices including secondary storage 324 (such as disk drives or memory cards), read only memory (ROM) 326, and random access memory (RAM) 3210. The processor 322 may be implemented as one or more CPU chips.

The system 300 includes a user interface (UI) 330 for controlling the processor 322. The UI 330 may comprise a touch screen, keyboard, keypad or other known input device. If the UI 330 comprises a touch screen, the processor 322 is operative to generate an image on the touch screen. Alternatively, the system may include a separate screen 301 for displaying images under the control of the processor 322.

The secondary storage 324 typically comprises a memory card or other storage device and is used for non-volatile storage of data and as an over-flow data storage device if RAM 3210 is not large enough to hold all working data. Secondary storage 324 may be used to store programs which are loaded into RAM 3210 when such programs are selected for execution.

In this embodiment, the secondary storage 324 has an order generation component 324a, comprising non-transitory instructions operative by the processor 322 to perform various operations of the method of the present disclosure. The ROM 326 is used to store instructions and perhaps data which are read during program execution. The secondary storage 324, the RAM 3210, and/or the ROM 326 may be referred to in some contexts as computer readable storage media and/or non-transitory computer readable media.

The processor 322 executes instructions, codes, computer programs, scripts which it accesses from hard disk, floppy disk, optical disk (these various disk based systems may all be considered secondary storage 324), flash drive, ROM 326, or RAM 3210. While only one processor 322 is shown, multiple processors may be present. Thus, while instructions may be discussed as executed by a processor, the instructions may be executed simultaneously, serially, or otherwise executed by one or multiple processors.

Whilst the foregoing description has described exemplary embodiments, it will be understood by those skilled in the art that many variations of the embodiment can be made within the scope of the attached claims. For example, an additional energy source may be provided proximate the image capture device 4, and the additional energy source and the image capture devices 4, 5 may be controlled to capture an image with each of the image capture devices 4, 5 when the additional energy source is activated and the other energy sources 6a, 6b, 6c, 8 are not. Since the additional energy source is proximate the image capture device 4, the images captured by the image capture devices 4, 5 are "bright field" images, showing the skin above the tumor 3a illuminated brightly from the front. A stereo pair of such images is particularly suitable for forming a 3-D model of the surface of the skin over the tumor stereoscopically.

Although, in the explanation of the embodiment given above, the second 2-D image(s) are captured only after the confirmation step is carried out, in a variation of the embodiment, the system may, at intervals, capture successive sets of 2-D images of the skin of the animal over the tumor, including both the first and second 2-D images. That is, when some 2-D images of each set are captured, the system illuminates the skin in a first manner (first light conditions), and when other of the 2-D images of each set are captured, the system illuminates the skin in a second manner (second light conditions). After the set of images is captured, the system uses each set of captured 2-D images to perform the confirmation step, and if, the confirmation step is positive, to form the 3-D image of the skin.

In the explanation of the embodiment given above, the skin of the animal exhibits a tumor, but the embodiment is equally applicable to a case in which the skin of the animal instead exhibits a wound.

In a further variation of the embodiment, the image capture device 4 may be operative to generate respective images using captured light in a first frequency range, and captured light in a second frequency range, where the first and second frequency ranges preferably do not overlap. The image capture device 5 may be operative to generate images only from light in the second frequency range. The energy sources 8 would be operative to generate light in the first frequency range, and the energy sources 6a, 6b, 6c would be operative to generate light in the second frequency range. The images captured by the energy sensor 4 using captured light in the first frequency range would be used as the first image(s) in steps 201 and 202. The images captured by the energy sensors 4, 5 in the second frequency range, would be used as the second images in steps 205 and 206. In this case it would not matter with what intensity the energy source 8 generates light while the second images are captured, since the light it generates would not be used to form the second images. Similarly, it would not matter with what intensity the energy sources 6a, 6b, 6c generate light while the first images are captured, since the light they generate would not be used to form the first images. Many similar further variations of the embodiment are possible, as will be apparent to the skilled reader, e.g. in which the light sources 6a, 6b, 6c generate light of different respective frequencies which the energy sensors 4 and/or 5 may be operative to capture and process in different respective ways, e.g. such that three second images are captured simultaneously using captured light of the three respective frequencies generated by the light sources 6a, 6b, 6c.

**Claims**

1.  A method for forming a three-dimensional model of a portion of the skin of an animal, the portion of the skin of the animal being located within an imaging region of an imaging assembly, the imaging region being in the field of view of an energy sensor having a viewing direction, and illuminated by an illumination system operative to illuminate the imaging region (i) in at least one first direction at a first angle to the viewing direction of the energy sensor, and (ii) in at least one second direction at a second angle to the viewing direction of the energy sensor, the first angle being greater than the second angle, the method comprising:

    (i) capturing with the energy sensor at least one first two-dimensional image of the portion of the skin of the animal when the illumination system illuminates the imaging region at least in the first direction;
    (ii) using the at least one first two-dimensional image to determine whether the skin of the animal is correctly presented; and
    (iii) upon the determination being positive, forming a three-dimensional image of the skin of the animal using at least one second two-dimensional image of the skin of the animal captured when the illumination system illuminates the imaging region at least in the second direction,

the at least one first two-dimensional image being captured with a higher proportion of (a) illumination directed at the imaging region in the first direction, to (b) illumination directed at the imaging region in the second direction, than the at least one second two dimensional image.

2.  A method according to claim 1 in which the ratio of (a) the illumination power which the illumination system directs at the imaging region in the first direction, and (b) the illumination power which the illumination system directs at the imaging region in the second direction, is greater when the at least one first two-dimensional image is captured than when the at least one second two dimensional image is captured.

3.  A method according to claim 1 or claim 2 in which the at least one second image is captured after the step of determining whether the skin of the animal is correctly presented.

4.  A method according to claim 1, claim 2 or claim 3 in which:

    when the at least one first two-dimensional image is captured, the illumination system only illuminates the imaging region in the first direction, and
    when the at least one second two-dimensional image is captured, the illumination system only illuminates the imaging region in the second direction.

5.  A method according to any preceding claim in which the second angle is in the range 0°-30°.

6.  A method according to any preceding claim, in which the first angle is more than 60°.

7.  A method according to claim 6, in which the first angle is more than 70°.

8.  A method according to claim 6, in which the first angle is more than 90°.

9.  A method according to any preceding claim in which at least one said second image is captured using the energy sensor.

10. A method according to any preceding claim in which the imaging region is provided within an enclosure which prevents ambient light from falling into the imaging region.

11. A method according to any preceding claim in which the step of determining if the skin of the animal is correctly presented includes automatically extracting from the first 2-D image an elongate area corresponding to an edge of a protrusion or cavity on the animal skin, and determining whether the elongate area meets a continuity criterion.

12. A method according to claim 11, in which, upon the determination being positive, an indication is provided to a user of the apparatus that the animal meets a criterion indicative of the second images being sufficient to measure the protrusion or cavity.

13. A method according to any preceding claim in which the step of forming the 3-D image is performed using at least one of stereoscopy and photometry.

14. A method according to claim 13 in which the step of forming the 3-D image is performed by using stereoscopy to form an initial 3-D image, and photometry to refine the initial 3-D image.

15. An imaging system for forming a three-dimensional model of a portion of the skin of an animal when the portion of the skin of the animal is located within an imaging region of the imaging system, the imaging system comprising:

> an image capture system comprising an energy sensor associated with a viewing direction and arranged to form two-dimensional images of the imaging region in the viewing direction,
> an illumination system operative to illuminate the imaging region (i) in at least one first direction at a first angle to the viewing direction of the energy sensor, and (ii) in at least one second direction at a second angle to the viewing direction of the energy sensor, the first angle being greater than the second angle; and
> a data processing system for controlling the image capture system, and for analysing images captured by the image capture system,
> the imaging system being configured to perform a method according to any preceding claim.

**Patentansprüche**

1. Verfahren zum Bilden eines dreidimensionalen Modells eines Abschnitts der Haut eines Tieres, wobei der Abschnitt der Haut des Tieres sich innerhalb eines Abbildungsbereichs einer Abbildungsanordnung befindet, wobei der Abbildungsbereich im Sichtfeld eines Energiesensors, der eine Blickrichtung aufweist, liegt und durch ein Beleuchtungssystem beleuchtet wird, das betriebsfähig ist, den Abbildungsbereich (i) in mindestens einer ersten Richtung unter einem ersten Winkel zur Blickrichtung des Energiesensors und (ii) in mindestens einer zweiten Richtung unter einem zweiten Winkel zur Blickrichtung des Energiesensors zu beleuchten, wobei der erste Winkel größer als der zweite Winkel ist, wobei das Verfahren umfasst:

> (i) Aufnehmen mindestens eines ersten zweidimensionalen Bildes des Hautabschnitts des Tieres mit dem Energiesensor, wenn das Beleuchtungssystem den Abbildungsbereich mindestens in der ersten Richtung beleuchtet;
> (ii) Verwenden des mindestens einen ersten zweidimensionalen Bildes, um zu bestimmen, ob die Haut des Tieres korrekt dargestellt wird; und
> (iii) falls die Bestimmung positiv ausfällt, Bilden eines dreidimensionalen Bildes der Haut des Tieres unter Verwendung mindestens eines zweiten zweidimensionalen Bildes der Haut des Tieres, das aufgenommen wird, wenn das Beleuchtungssystem den Abbildungsbereich mindestens in der zweiten Richtung beleuchtet,

wobei das mindestens eine erste zweidimensionale Bild mit einem höheren Anteil von (a) auf den Abbildungsbereich in der ersten Richtung gerichteter Beleuchtung zu (b) auf den Abbildungsbereich in der zweiten Richtung gerichteter Beleuchtung aufgenommen wird als das mindestens eine zweite zweidimensionale Bild.

2. Verfahren nach Anspruch 1, bei dem das Verhältnis von (a) der Beleuchtungsleistung, die das Beleuchtungssystem auf den Abbildungsbereich in der ersten Richtung richtet, zu (b) der Beleuchtungsleistung, die das Beleuchtungssystem auf den Abbildungsbereich in der zweiten Richtung richtet, größer ist, wenn das mindestens eine erste zweidimensionale Bild aufgenommen wird, als wenn das mindestens eine zweite zweidimensionale Bild aufgenommen wird.

3. Verfahren nach Anspruch 1 oder Anspruch 2, bei dem das mindestens eine zweite Bild nach dem Schritt des Bestimmens, ob die Haut des Tieres korrekt dargestellt wird, aufgenommen wird.

4. Verfahren nach Anspruch 1, Anspruch 2 oder Anspruch 3, bei dem:

> wenn das mindestens eine erste zweidimensionale Bild aufgenommen wird, das Beleuchtungssystem den Abbildungsbereich nur in der ersten Richtung beleuchtet, und
> wenn das mindestens eine zweite zweidimensionale Bild aufgenommen wird, das Beleuchtungssystem den Abbildungsbereich nur in der zweiten Richtung beleuchtet.

5. Ein Verfahren nach einem der vorhergehenden Ansprüche, bei dem der zweite Winkel im Bereich von 0° bis 30° liegt.

6. Verfahren nach einem der vorhergehenden Ansprüche, bei dem der erste Winkel mehr als 60° beträgt.

7. Verfahren nach Anspruch 6, bei dem der erste Winkel mehr als 70° beträgt.

8. Verfahren nach Anspruch 6, bei dem der erste Winkel mehr als 90° beträgt.

9. Verfahren nach einem der vorstehenden Ansprüche, bei dem das mindestens eine zweite Bild mithilfe des Energiesensors aufgenommen wird.

10. Verfahren nach einem der vorhergehenden Ansprüche, bei dem der Abbildungsbereich innerhalb eines Gehäuses vorgesehen ist, welches verhindert, dass Umgebungslicht in den Abbildungsbereich fällt.

11. Verfahren nach einem der vorhergehenden Ansprüche, bei dem der Schritt des Bestimmens, ob die Haut des Tieres korrekt dargestellt wird, einschließt: automatisches Extrahieren eines länglichen Bereichs, der einem Rand eines Vorsprungs oder einer Vertiefung auf der Tierhaut entspricht, aus dem ersten 2-D-Bild und Bestimmen, ob der längliche Bereich ein Kontinuitätskriterium erfüllt.

12. Verfahren nach Anspruch 11, bei dem, falls die Bestimmung positiv ausfällt, einem Benutzer der Vorrichtung ein Hinweis darauf gegeben wird, dass das Tier ein Kriterium erfüllt, welches angibt, dass die zweiten Bilder ausreichen, um den Vorsprung oder die Vertiefung zu messen.

13. Verfahren nach einem der vorhergehenden Ansprüche, bei dem der Schritt des Bildens des 3-D-Bildes unter Verwendung von mindestens einem von Stereoskopie und Fotometrie durchgeführt wird.

14. Verfahren nach Anspruch 13, bei dem der Schritt des Bildens des 3-D-Bildes durchgeführt wird, indem Stereoskopie zum Bilden eines anfänglichen 3-D-Bildes und Fotometrie zum Verfeinern des anfänglichen 3-D-Bildes verwendet wird.

15. Abbildungssystem zum Bilden eines dreidimensionalen Modells eines Abschnitts der Haut eines Tieres, wenn der Abschnitt der Haut des Tieres sich innerhalb eines Abbildungsbereichs des Abbildungssystems befindet, wobei das Abbildungssystem umfasst:

    ein Bildaufnahmesystem, das einen Energiesensor umfasst, der mit einer Blickrichtung assoziiert und dafür eingerichtet ist, zweidimensionale Bilder des Abbildungsbereichs in der Blickrichtung zu erzeugen,
ein Beleuchtungssystem, das den Abbildungsbereich (i) in mindestens einer ersten Richtung unter einem ersten Winkel zur Blickrichtung des Energiesensors und (ii) in mindestens einer zweiten Richtung unter einem zweiten Winkel zur Blickrichtung des Energiesensors beleuchtet, wobei der erste Winkel größer als der zweite Winkel ist; und
ein Datenverarbeitungssystem zum Steuern des Bildaufnahmesystems und zum Analysieren der durch das Bildaufnahmesystem aufgenommenen Bilder,
wobei das Abbildungssystem dafür konfiguriert ist, ein Verfahren nach einem der vorhergehenden Ansprüche durchzuführen.

**Revendications**

1. Procédé pour former un modèle tridimensionnel d'une partie de la peau d'un animal, la partie de la peau de l'animal étant localisée à l'intérieur d'une région de formation d'image d'un ensemble de formation d'image, la région de formation d'image étant dans le champ de visualisation d'un capteur d'énergie qui présente une direction de visualisation et étant éclairée par un système d'éclairage qui est opérationnel pour éclairer la région de formation d'image (i) dans au moins une première direction selon un premier angle par rapport à la direction de visualisation du capteur d'énergie et (ii) dans au moins une seconde direction selon un second angle par rapport à la direction de visualisation du capteur d'énergie, le premier angle étant plus grand que le second angle, le procédé comprenant :

    (i) la capture, à l'aide du capteur d'énergie, d'au moins une première image bidimensionnelle de la partie de la peau de l'animal lorsque le système d'éclairage éclaire la région de formation d'image au moins dans la première direction ;
    (ii) l'utilisation de l'au moins une première image bidimensionnelle pour déterminer si oui ou non la peau de l'animal est présentée correctement ; et
    (iii) suite à une détermination positive, la formation d'une image tridimensionnelle de la peau de l'animal en utilisant au moins une seconde image bidimensionnelle de la peau de l'animal qui est capturée lorsque le système d'éclairage éclaire la région de formation d'image au moins dans la seconde direction,

l'au moins une première image bidimensionnelle étant capturée tandis que (a) une proportion de l'éclairage qui est dirigé au niveau de la région de formation d'image dans la première direction par rapport à (b) une proportion de l'éclairage qui est dirigé au niveau de la région de formation d'image dans la seconde direction, est plus élevée que dans le cas de l'au moins une seconde image bidimensionnelle.

2. Procédé selon la revendication 1, dans lequel le rapport de (a) la puissance d'éclairage que le système d'éclairage dirige au niveau de la région de formation d'image dans la première direction et de (b) la puissance d'éclairage que le système d'éclairage dirige au niveau de la région de formation d'image dans la seconde direction est plus grand lorsque l'au moins une première image bidimensionnelle est capturée que lorsque l'au moins une seconde image bidimensionnelle est capturée.

3. Procédé selon la revendication 1 ou la revendication 2, dans lequel l'au moins une seconde image est capturée après l'étape de détermination de si oui ou non la peau de l'animal est présentée correctement.

4. Procédé selon la revendication 1, la revendication 2 ou la revendication 3, dans lequel :

lorsque l'au moins une première image bidimensionnelle est capturée, le système d'éclairage éclaire seulement la région de formation d'image dans la première direction ; et
lorsque l'au moins une seconde image bidimensionnelle est capturée, le système d'éclairage éclaire seulement la région de formation d'image dans la seconde direction.

5. Procédé selon l'une quelconque des revendications qui précèdent, dans lequel le second angle s'inscrit dans la plage qui va de 0° à 30°.

6. Procédé selon l'une quelconque des revendications qui précèdent, dans lequel le premier angle est supérieur à 60°.

7. Procédé selon la revendication 6, dans lequel le premier angle est supérieur à 70°.

8. Procédé selon la revendication 6, dans lequel le premier angle est supérieur à 90°.

9. Procédé selon l'une quelconque des revendications qui précèdent, dans lequel au moins une dite seconde image est capturée en utilisant le capteur d'énergie.

10. Procédé selon l'une quelconque des revendications qui précèdent, dans lequel la région de formation d'image est prévue à l'intérieur d'une enceinte qui empêche que la lumière ambiante n'arrive à l'intérieur de la région de formation d'image.

11. Procédé selon l'une quelconque des revendications qui précèdent, dans lequel l'étape de détermination de si la peau de l'animal est présentée correctement inclut l'extraction automatique, à partir de la première image 2D, d'une zone allongée qui correspond à un bord d'une protubérance ou d'une cavité sur la peau de l'animal et la détermination de si oui ou non la zone allongée satisfait un critère de continuité.

12. Procédé selon la revendication 11, dans lequel, suite à une détermination positive, une indication consistant en ce que l'animal satisfait un critère qui est indicatif du fait que les secondes images s'avèrent suffisants pour mesurer la protubérance ou la cavité est fournie à un utilisateur de l'appareil.

13. Procédé selon l'une quelconque des revendications qui précèdent, dans lequel l'étape de formation de l'image 3D est réalisée en utilisant au moins une parmi la stéréoscopie et la photométrie.

14. Procédé selon la revendication 13, dans lequel l'étape de formation de l'image 3D est réalisée en utilisant la stéréoscopie pour former une image 3D initiale et la photométrie pour affiner l'image 3D initiale.

15. Système de formation d'image pour former un modèle tridimensionnel d'une partie de la peau d'un animal lorsque la partie de la peau de l'animal est localisée à l'intérieur d'une région de formation d'image du système de formation d'image, le système de formation d'image comprenant :

un système de capture d'image qui comprend un capteur d'énergie qui est associé à une direction de visualisation et qui est agencé pour former des images bidimensionnelles de la région de formation d'image dans la direction de visualisation,
un système d'éclairage qui est opérationnel pour éclairer la région de formation d'image (i) dans au moins une première direction selon un premier angle par rapport à la direction de visualisation du capteur d'énergie et (ii) dans au moins une seconde direction selon un second angle par rapport à la direction de visualisation du capteur d'énergie, le premier angle étant plus grand que le second angle ; et
un système de traitement de données pour commander le système de capture d'image et pour analyser les images qui sont capturées par le système de capture d'image,
le système de formation d'image étant configuré pour réaliser un procédé selon l'une quelconque des revendications qui précèdent.

Fig. 1

Fig. 2

201

200

Activate energy sources 8 and capture first image with
camera 4

202

Determine if tumor edges are well-defined

203

No

Yes

204

Provide warning to
user

Provide indication to
user

205

Activate directional energy sources 6a, 6b, 6c in turn,
and capture second images with cameras 4, 5

206

Form initial 3-D model with
stereoscopy

207

Refine the initial model using photometry

208

Extract data characterizing the tumor

Fig. 3

FIG. 4

Fig. 5(a)

Fig. 5(b)

Fig. 5(c)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012146720 A
- US 7450783 B

- WO 2009122200 A

**Non-patent literature cited in the description**

- **I. C. GIRIT et al.** A Structured Light-based System for Scanning Subcutaneous Tumors in Laboratory Animals. *Comparative Medicine,* 2008, vol. 58, 264-270